# EUROPÄISCHE PATENTANMELDUNG

(11) **EP 2 907 380 A1**
(43) Veröffentlichungstag der Anmeldung: **19.08.2015**
(21) Anmeldenummer: 14155258.8
(22) Anmeldetag: 14.02.2014
(51) Int. Cl.: A01K 1/015

(54) **Tierstreu**

(71) Anmelder: H. von Gimborn GmbH, 46446 Emmerich (DE)
(72) Erfinder: Cannata, Giovanna, 47551 Bedburg-Hau (DE); Hammerl, Rainer, 93077 Bad Abbach (DE); Prinsteiner, Robert, 93309 Kelheim (DE)
(74) Vertreter: Andrae | Westendorp Patentanwälte Partnerschaft

(57) **Zusammenfassung**

Die Erfindung betrifft eine Tierstreu mit organischen und/oder anorganischen Sorbensteilchen, enthaltend ein Verarbeitungsprodukt aus der oberirdischen Biomasse der Aloe vera Pflanze, Verfahren zur Herstellung einer solchen Tierstreu und die Verwendung des vorstehenden Verarbeitungsproduktes in einer Tierstreu.

## Beschreibung

Die Erfindung betrifft eine neuartige Tierstreu mit organischen und/oder anorganischen Sorbensteilchen, enthaltend ein Verarbeitungsprodukt aus der oberirdischen Biomasse der Aloe vera Pflanze. Weiterhin betrifft die Erfindung ein Verfahren zur Herstellung einer solchen Tierstreu und die Verwendung von einem Verarbeitungsprodukt aus der oberirdischen Biomasse der Aloe vera Pflanze in einer Tierstreu.

### Hintergrund der Erfindung

Haustiere, insbesondere Katzen, werden aus Gründen der Hygiene und der Vermeidung von Gerüchen daran gewöhnt, eine mit einer Tierstreu (Einstreu) versehene Stelle, insbesondere eine Schale oder Box, als Toilette zu benutzen.

Für Tierstreu werden gemäß dem Stand der Technik eine große Vielzahl unterschiedlicher Materialien verwendet. Es kommen sowohl organische als auch anorganische Sorbentien zum Einsatz, wobei Tierstreumaterialien regelmäßig in Granulatform vorliegen.

Eine Übersicht über einige im Stand der Technik verwendete Materialien offenbart z.B. die US-Patentschrift 5,188,064 (siehe Spalte 1, Zeile 19 bis Spalte 2, Spalte 29).

Im Stand der Technik sind auch Zusatzstoffe bekannt, die eine bessere Geruchsbindung oder Feuchtigkeitsaufnahme der Tierstreu bewirken sollen, oder die Akzeptanz durch ein Haustier durch die Verwendung von Signalduftstoffen verbessern. Beispielsweise wird hier auf die EP 1 020 112 A2 verwiesen, die eine neuartige Tierstreu offenbart, enthaltend einen oder mehrere Signalduftstoffe ausgewählt aus der Gruppe der Carbonsäuren und deren Ester, Alkohole, Carbonyle, Phenol- und Kresolderivate, Amine und Amide, Indol und Skatol sowie deren Derivate in einer Konzentration, die vom Haustier wahrgenommen wird, im Wesentlichen jedoch nicht vom Menschen.

Weiterhin ist aus der WO00/53001 A1 eine Tierstreu bekannt, die auf organischen Sorbentien und deren Gemischen basiert und mindestens ein umweltverträgliches biostatisches bzw. biozides Mittel ausgewählt aus (a) Thymol und/oder mindestens einer festen Peroxoverbindung, enthält.

Es besteht jedoch ein ständig wachsender Bedarf nach verbesserten Tierstreumaterialien, die für das Tier, das die Tierstreu aufsuchen soll, eine besonders hohe Akzeptanz aufweisen und gleichzeitig eine besonders hohe Geruchs- und Feuchtigkeitsbindung aufweisen.

Ziel der vorliegenden Erfindung war es daher, eine verbesserte Tierstreu herzustellen, die die vorstehend beschriebenen Nachteile des Standes der Technik vermeidet und besonders vorteilhafte Eigenschaften für das Tier und den Tierhalter in Bezug auf die Eigenschaften der Tierstreu bereitstellt.

### Beschreibung der Erfindung

Nach einem ersten Aspekt betrifft die Erfindung eine Tierstreu, enthaltend ein Verarbeitungsprodukt aus der oberirdischen Biomasse der Aloe vera Pflanze. Die erfindungsgemäße Tierstreu kann dabei jegliche im Stand der Technik bekannten oder dem Fachmann geläufig oder geeignet erscheinenden organischen und/oder anorganischen Sorbentien enthalten. Diese Sorbentien liegen in der Regel in Teilchenform, beispielsweise als Granulat vor.

Die Teilchen können eine gleichmäßige oder eine ungleichmäßige Oberflächenstruktur aufweisen. Beispiele für Teilchen mit ungleichmäßiger Oberflächenstruktur sind solche, die z. B. durch Brechen von größeren Teilchen oder Extrudaten und ggf. anschließendes Sieben zur Einstellung der gewünschten Teilchengrößen, gewonnen wurden. Ein Beispiel für Teilchen mit regelmäßiger Oberflächenstruktur sind beispielsweise solche, die durch Granulieren aus kleineren Teilchen, z. B. in einem Granuliermischer, hergestellt wurden.

Im Rahmen der vorliegenden Erfindung können für die Tierstreu sowohl organische als auch anorganische Sorbensteilchen verwendet werden. Auch Mischungen aus organischen und anorganischen Sorbensteilchen können verwendet werden und werden nach einer Ausführungsform der vorliegenden Erfindung sogar bevorzugt.

Allgemein ist es die Aufgabe der Sorbensteilchen, die bei der Benutzung der Tierstreu durch das Tier entstehende Feuchtigkeit (im Urin oder in anderen Exkrementen) aufzunehmen. Gleichzeitig sollen die bei der Benutzung der Tierstreu entstehenden unangenehmen Gerüche ebenfalls beseitigt bzw. sorbiert werden. Nach einem erfindungsgemäßen Aspekt kann es sich bei der erfindungsgemäßen Tierstreu um eine sogenannte klumpende Tierstreu handeln, d. h. eine Tierstreu, die bei der Aufnahme von Feuchtigkeit Klumpen bildet. Solche Klumpen können durch den Tierhalter in einfacher Weise aus der Tierstreuschüttung entfernt werden, ohne dass die gesamte Schüttung ausgetauscht werden muss.

Eine nicht beschränkende Liste von Beispielen für organische Sorbentien bzw. Sorbensteilchen, die in den erfindungsgemäßen Tierstreuen verwendet werden können, umfasst zellulosehaltige Substanzen, beispielsweise Stroh, Sägemehl, Holzspäne, Rinden oder dergleichen, aber auch Aktivkohle, Kunststoffmaterialien wie poröse Kunststoffperlen, Polyacrylate, oder dergleichen. Nach einer erfindungsgemäßen Ausführungsform wird als organisches Material mindestens ein zellulosehaltiges Material, wie z. B. zerkleinertes Holzmaterial verwendet. Weitere Beispiele sind feinteiliges Holzmehl und/oder zerkleinerte Holzspäne. Es können aber auch feinteiliger Zellstoff und/oder ein Sekundärfasern enthaltender Zellulose-Stoff verwendet werden. Auch Stroh oder Samen- bzw. Fruchtschalen etc. können als organische Sorbentien bzw. zellulosehaltige Sorbentien enthalten sein. Grundsätzlich können alle dem Fachmann geläufigen organischen Materialien, die zur Feuchtigkeitsaufnahme geeignet sind, alleine oder in Mischungen verwendet werden.

Nach einer bevorzugten Ausführungsform umfasst zumindest ein Teil der Sorbensteilchen in der erfindungsgemäßen Tierstreu auch Aktivkohle oder besteht daraus.

Eine nicht beschränkende Liste von anorganischen Sorbentien bzw. Sorbensteilchen, die in der erfindungsgemäßen Tierstreu verwendet werden können, umfasst beispielsweise silicatische Materialien wie natürliche und synthetische Tone, beispielsweise Bentonite, Attapulgite, Sepiolithe oder Kaolin, Diatomeenerde, Mica, Talk, Sand, Quarzmehl, Flugasche, Kalziumcarbonat oder dergleichen.

Die vorstehenden organischen und anorganischen Sorbentien können alleine oder in beliebigen Mischungen eingesetzt werden. Dabei können verschiedene organische Sorbentien miteinander gemischt werden, verschiedene anorganische Sorbentien miteinander gemischt werden, oder sowohl organische als auch anorganische Sorbentien miteinander vermischt werden. Die Mischungen können innerhalb von einzelnen Sorbensteilchen vorliegen, oder es können Gemische aus mindestens zwei Arten von unterschiedlichen Sorbensteilchen verwendet werden, wobei die Sorbentienzusammensetzung der Arten von Sorbensteilchen unterschiedlich ist.

Nach einer bevorzugten Ausführungsform enthält oder besteht mindestens eine Art von Sorbensteilchen in der der erfindungsgemäßen Tierstreu aus silicatischem bzw. schichtsilicatischem Material, insbesondere schichtsilicatischem Material. Besonders bevorzugt sind ein oder mehrere Phyllosilcate wie Bentonit.

Nach einer bevorzugten Ausführungsform der vorliegenden Erfindung enthält oder besteht mindestens eine Art von Sorbensteilchen in der erfindungsgemäßen Tierstreu aus Aktivkohle.

Nach einer bevorzugten Ausführungsform der vorliegenden Erfindung enthält oder besteht mindestens eine Art von Sorbensteilchen in der erfindungsgemäßen Tierstreu aus zellulosehaltigem Material, insbesondere holzfaserhaltigem Material.

Die Teilchengröße der in der erfindungsgemäßen Tierstreu enthaltenen Sorbensteilchen kann in weiten Grenzen variieren und vom Fachmann beliebig eingestellt werden. Allgemein wird die Teilchengröße der Sorbensteilchen in der erfindungsgemäßen Tierstreu zwischen etwa 0,01 mm bis etwa 10 mm, insbesondere etwa 0,05 mm bis etwa 5 mm, liegen. Es können jedoch auch abweichende Teilchengrößen gewählt werden, wenn eine besonders feinteilige bzw. eine besonders grobkörnige Tierstreu gewünscht ist.

Neben den organischen und/oder anorganischen Sorbensteilchen enthält die erfindungsgemäße Tierstreu mindestens ein Verarbeitungsprodukt aus der oberirdischen Biomasse der Aloe vera Pflanze.

Nach einem Aspekt der Erfindung können also neben dem mindestens einen Verarbeitungsprodukt aus der oberirdischen Biomasse der Aloe vera Pflanze noch ein oder mehrere Zusätze in der Tierstreu enthalten sein, wie z. B. Bindemittel, Duftstoffe, bakteriostatische oder bakterizide Mittel, Farbstoffe, andere Pflanzen-Verarbeitungsprodukte oder dergleichen.

Erfindungswesentlich ist jedoch, dass mindestens ein Verarbeitungsprodukt aus der oberirdischen Biomasse der Aloe vera Pflanze (im Folgenden auch kurz "Verarbeitungsprodukt" genannt) enthalten ist.

So wurde im Rahmen der vorliegenden Erfindung überraschend gefunden, dass sich durch den Zusatz des Verarbeitungsproduktes aus der oberirdischen Biomasse der Aloe vera Pflanze in der erfindungsgemäßen Tierstreu besonders vorteilhafte Produkteigenschaften ergeben. Es wurde unerwarteter Weise gefunden, dass die erfindungsgemäße Tierstreu mit dem Zusatz des vorstehenden Verarbeitungsproduktes aus der oberirischen Biomasse der Aloe vera Pflanze zu einer signifikant verbesserten Akzeptanz der Tierstreu durch das Haustier führt. Insbesondere wurde für Katzen gefunden, dass diese die erfindungsgemäße Tierstreu gegenüber einer Tierstreu ohne den Zusatz eines Verarbeitungsproduktes aus der oberirdischen Biomasse der Aloe vera Pflanze bevorzugen und die Tiertoilette mit der erfindungsgemäßen Tierstreu häufiger aufsuchen. Auch wurde gefunden, dass mit der erfindungsgemäßen Tierstreu eine raschere Gewöhnung der Tiere an die Tiertoilette möglich ist. Diese Wirkung ist umso überraschender als sie bereits bei sehr geringen Prozentsätzen des Verarbeitungsproduktes aus der oberirischen Biomasse der Aloe vera Pflanze in der Tierstreu zu beobachten ist.

Weiterhin wurde überraschenderweise gefunden, dass durch das Ein- bzw. Aufbringen des Verarbeitungsproduktes aus der oberirdischen Biomasse der Aloe vera Pflanze auch die Geruchs- und Feuchtigkeitsbindung verbessert wird. Ohne dass die Erfindung auf die Richtigkeit der folgenden Annahme beschränkt ist, wird davon ausgegangen, dass die in dem Verarbeitungsprodukt aus der oberirdischen Biomasse der Aloe vera Pflanze enthaltenden hydrophilen bzw. feuchtigkeitsaufnehmenden Substanzen eine besonders rasche und effektive Geruchs- und Feuchtigkeitsbindung ermöglichen.

Die für die unangenehmen Gerüche verantwortlichen Substanzen in der benutzten Tierstreu werden zunächst von den Tierexkrementen oder den diese verarbeitenden Mikroorganismen in die Gasphase freigesetzt. Dort werden sie entweder von Bestandteilen der Tierstreu, insbesondere den Sorbensteilchen absorbiert, oder sie entweichen aus der Tierstreu und können von dem Tier und dem Tierhalter (unerwünschter Weise) wahrgenommen werden. Es wird angenommen, dass die im Verarbeitungsprodukt aus der oberirdischen Biomasse der Aloe vera Pflanze enthaltenen Substanzen, insbesondere die hydrophilen Substanzen wie Polysacharide, Mucopolysacharide etc. eine besonders rasche und effiziente Anbindung der leicht flüchtigen Geruchsstoffe und der Flüssigkeit (Feuchtigkeit) an die Sorbensteilchen ermöglichen, wobei die Geruchssubstanzen und die Flüssigkeit dann langfristig in die Sorbensteilchen aufgenommen bzw. eingelagert werden können. Das Verarbeitungsprodukt aus der oberirdischen Biomasse der Aloe vera Pflanze sorgt somit überraschend für eine besonders schnelle Flüssigkeitsaufnahme und Geruchsbindung und vermittelt auch zwischen der Gasphase und den organischen und/oder anorganischen Sorbensteilchen bei der raschen Entfernung der volatilen Geruchsstoffe (mit der Feuchtigkeit) aus der Gasphase und deren längerfristigen Einlagerung in die Sorbensteilchen.

Es wurde auch festgestellt, dass durch die erfindungsgemäße Verwendung des Verarbeitungsproduktes aus der oberirdischen Biomasse der Aloe vera Pflanze die Klumpendbildungseigenschaften der Tierstreu vorteilhaft beeinflusst werden können. So wird die nach Aufbringen der gleichen Flüssigkeitsmenge auf die Tierstreu gebildeten Klumpen bei Verwendung des Verarbeitungsproduktes aus der oberirdischen Biomasse der Aloe vera Pflanze verringert und entsprechend das Klumpengewicht verringert. Dies ist für die leichte Entfernbarkeit der Klumpen und die Ergiebigkeit der Streu positiv.

Unter "Aloe vera Pflanze" wird vorliegend die dem Fachmann geläufige Aloe vera verstanden. Nach einem bevorzugten Aspekt der vorliegenden Erfindung wird darunter die Aloe barbadensis Miller, oder eine daraus abgeleitete Sorte oder Unterart verstanden. Nach einer erfindungsgemäßen Ausführungsform fallen auch andere Aloe-Arten, wie beispielsweise die Aloe ferox (Kap-Aloe) und andere Aloe-Arten unter den vorstehenden Begriff und können erfindungsgemäß verwendet werden.

Die oberirdische Biomasse der Aloe vera Pflanze besteht im Wesentlichen aus den dicken, fleischigen Blättern, die in ihrem Inneren ein Innengel aufweisen.

Nach einer bevorzugten erfindungsgemäßen Ausführungsform wird ein Verarbeitungsprodukt aus den Blättern bzw. insbesondere aus dem Blattinneren (bzw. dem Innengel) der Aloe vera Pflanze verwendet. So wurde gefunden, dass die Verarbeitungsprodukte aus den Blättern bzw. dem Blattinneren der Aloe vera Pflanze besonders vorteilhafte Produkteigenschaften der erfindungsgemäßen Tierstreu ermöglichen.

Charakteristisch für die echte Aloe vera ist ein Gehalt an Acemannan, das auch Aloeverose genannt wird. Acemannan und Verfahren zu dessen Bestimmung sind dem Fachmann bekannt. Nach einer erfindungsgemäßen Ausführungsform weist das verwendete Verarbeitungsprodukt aus der oberirdischen Biomasse der Aloe vera daher einen Gehalt an Acemannan auf. Bevorzugt liegt der Gehalt an Acemannan in dem verwendeten Verarbeitungsprodukt aus der oberirdischen Biomasse der Aloe vera (so wie es in der Tierstreu eingesetzt bzw. den organische und/oder anorganischen Sorbensteilchen zugegeben wird) bei mindestens 0,1 Gew.-%, vorzugsweise mindestens 0,5 Gew.-%, insbesondere mindestens 1 Gew.-%, bezogen auf die gesamte Trockenmasse des Verarbeitungsproduktes (getrocknet bei 105 Grad Celsius bis zur Gewichtskonstanz).

Unter Verarbeitungsprodukt wird erfindungsgemäß ein Verarbeitungsprodukt in beliebiger fester oder flüssiger Form verstanden. Das erfindungsgemäße Verarbeitungsprodukt unterscheidet sich von einer Duftstoffzusammensetzung, die als wesentlichen Bestandteil ein oder mehrere Duftöle (ätherisches oder essentielles Öl und gegebenenfalls andere Duftstoffe in einem Lösungsmittel bzw. Lösungsmittelgemisch) enthält und nicht aus der Verarbeitung der oberirdischen Biomasse, insbesondere der Blätter oder des Blattinneren der Aloe vera abgeleitet ist.

Nach einer bevorzugten erfindungsgemäßen Ausführungsform wird ein Verarbeitungsprodukt verwendet, dass das Blattmaterial bzw. das Blattinnere (d.h. das Blattmaterial ohne die entfernte Blatthaut) der Aloe vera Pflanze in unverdünnter, verdünnter oder aufkonzentrierter Form enthält oder daraus besteht. Da die oberirdische Biomasse der Aloe vera Pflanze weitgehend aus dem gelartigen Blattinneren besteht, handelt es sich bei dem Verarbeitungsprodukt in unverdünnter und nicht aufkonzentrierter Form ebenfalls um ein Fluid oder Gel, wobei je nach den zusätzlichen Bestandteilen auch eine Suspension, eine Emulsion, oder dergleichen verwendet werden kann.

Nach einer bevorzugten Ausführungsform besteht das Verarbeitungsprodukt zu mindestens 25 Gew.-%, vorzugsweise mindestens 50 Gew.-%, insbesondere mindestens 75 Gew.-%, weiter bevorzugt mindestens 90 Gew.-% aus der oberirdischen Biomasse der Aloe vera Pflanze, insbesondere den Blättern oder dem Blattinneren der Aloe vera Pflanze, gegebenenfalls in aufkonzentrierter Form, d.h. zur Entfernung zumindest eines Teils des enthaltenen Wassers.

Nach einer erfindungsgemäßen Ausführungsform wird das Material der oberirdischen Biomasse bzw. der Blätter oder des Blattinneren bei der Herstellung des Verarbeitungsproduktes aufkonzentriert, wobei das enthaltene Wasser in dem Material zumindest teilweise entfernt wird. Bei weitergehender Entfernung des enthaltenen Wassers, z. B. durch Lyophilisierung oder Sprühtrocknung kann die Verarbeitung zu einem festen Verarbeitungsprodukt, beispielsweise einem Pulver führen. Die Entfernung von Wasser aus dem für das Verarbeitungsprodukt verwendeten Material hat für den Transport des Verarbeitungsproduktes oft Vorteile, und verhindert gegebenenfalls auch die Einbringung von unnötig viel Wasser in die Tierstreu bei der Zugabe des Verarbeitungsproduktes zu den verwendeten Sorbentien bzw. Sorbensteilchen.

Nach einem Aspekt der Erfindung geht man bei der Herstellung des Verarbeitungsproduktes zumindest 10 Gew.-%, insbesondere mindestens 25 Gew.-%, weiter bevorzugt mindestens 50 Gew.-% von der oberirdischen Biomasse, insbesondere den Blättern oder dem Blattinneren der Aloe vera Pflanze aus.

Nach einer bevorzugten erfindungsgemäßen Ausführungsform weist das Verarbeitungsprodukt bei Trocknung bis zur Gewichtskonstanz bei 105°C einen Trockenanteil auf, der zu mindestens 25 Gew.-%, insbesondere zu mindestens 50 Gew.-%, bevorzugt zu mindestens 75 Gew.-%, weiter bevorzugt zu mindestens 90 Gew.-%, insbesondere zu mindestens 95 Gew.-%, bezogen auf den gesamten Trockenanteil der oberirdischen Biomasse der Aloe vera Pflanze oder Teilen davon entstammt bzw. daraus besteht. Unter der oberirdischen Biomasse oder Teilen davon wird nach einer bevorzugten erfindungsgemäßen Ausführungsform ein Material verstanden, dass zu mindestens 50 Gew.-%, insbesondere mindestens 75 Gew.-% aus dem Blattinneren, insbesondere dem faserfreien Blattinnengel der Aloe vera Blätter besteht. Bevorzugt liegt der Trockenanteil des Verarbeitungsproduktes (bei Trocknung bis zur Gewichtskonstanz bei 105°C) bei mindestens etwa 1 Gew.-%, insbesondere mindestens etwa 3 Gew.-%, insbesondere mindestens etwa 4 Gew.-%.

Im Rahmen der Herstellung des Verarbeitungsproduktes können, wie vorstehend beschrieben, nach einer Ausführungsform der Erfindung, verschiedene Verarbeitungsschritte gewählt werden, die dem Fachmann geläufig sind oder z.B. zur Einstellung der gewünschten Konsistenz geeignet erscheint, wie z. B. Aufkonzentration, Verdünnung, oder Abmischung mit anderen Bestandteilen. Nach einer erfindungsgemäßen Ausführungsform enthält das Verarbeitungsprodukt keine Zusätze außer den Bestandteilen der oberirdischen Biomasse der Aloe vera, und ist lediglich gegebenenfalls bezüglich des Wassergehaltes aufkonzentriert oder verdünnt.

Im Rahmen der vorliegenden Erfindung wurde weiterhin unerwartet gefunden, dass sich die hierin beschriebenen positiven Produkteigenschaften bereits mit einem relativ geringen Zusatz des Verarbeitungsproduktes aus der oberirdischen Biomasse der Aloe vera Pflanze verwirklichen lassen. Nach einer erfindungsgemäßen Ausführungsform wird dabei das Verarbeitungsprodukt in einer Menge von mindestens 0,01 Gew.-%, insbesondere mindestens 0,5 Gew.-%, weiter bevorzugt mindestens 1 Gew.-%, jeweils bezogen auf die Gesamtmasse der Tierstreu, verwendet. Im unteren Konzentrationsbereich ist auch die erhöhte Tierakzeptanz der erfindungsgemäßen Streu bereits sehr gut ausgeprägt. Dabei wird nach einer möglichen Ausführungsform der Erfindung der vorstehende Prozentsatz der Menge an Verarbeitungsprodukt auf die Menge an Verarbeitungsprodukt ohne reine Aufkonzentrationsschritte zur Entfernung von Wasser bei der Herstellung aus der Biomasse der Aloe vera Pflanze bezogen, d.h. danach würde 1 Gew.-% eines 10-fach durch die Entfernung von Wasser hergestellten Konzentrats 10 Gew.-% Zugabe des (ursprünglichen) Verarbeitungsprodukt entsprechen.

Dabei dann das Verarbeitungsprodukt grundsätzlich in jeder technisch möglichen und dem Fachmann geläufigen Weise in die Tierstreu eingearbeitet werden. Je nach Konsistenz des Verarbeitungsproduktes kann z. B. die Einmischung als Pulver oder Feststoff erfolgen, beispielweise bei der Herstellung der Sorbensteilchen, oder in Abmischung mit vorgefertigten Sorbensteilchen.

Nach einer bevorzugten Ausführungsform der vorliegenden Erfindung wird das Verarbeitungsprodukt jedoch in flüssiger bzw. fluider oder auch gelartiger Form zugegeben. Dabei können beispielsweise die Sorbensteilchen mit der gewünschten Menge des Verarbeitungsproduktes getränkt werden. Besonders bevorzugt wird jedoch, dass das Verarbeitungsprodukt in flüssiger bzw. fluider Form auf die Sorbensteilchen aufgesprüht wird. Ein solches Aufsprühen lässt sich in besonders einfacher Weise technisch an verschiedenen Stellen des Produktionsprozesses verwirklichen. Dabei kann das Aufbringen bzw. Aufsprühen auf nur einen Teil der Sorbensteilchen oder auf alle Sorbensteilchen erfolgen.

Nach einem Aspekt der vorliegenden Erfindung hat sich gezeigt, dass sich besonders gute Produkteigenschaften erzielen lassen, wenn die Tierstreu Sorbensteilchen mit schichtsilicatischen Materialien, Aktivkohle und/oder zellulosehaltigen Materialien, wie hierin beschrieben enthalten.

Weiter unerwartet wurde gefunden, dass die Sorbensteilchen, auf die erfindungsgemäß das Verarbeitungsprodukt aus der oberirdischen Biomasse der Aloe vera Pflanze aufgebracht wurde, sich besonders angenehm anfühlen und eine Art "sanfte" Oberfläche bereitstellen, die für die Tiere und die Tierhalter angenehm erscheint.

Grundsätzlich können auch größere Mengen des Verarbeitungsprodukt aus der oberirdischen Biomasse der Aloe vera Pflanze in der Tierstreu verwendet werden. In vielen Fällen ist eine praktische Grenze bei etwa 50 Gew.-%, insbesondere etwa 20 Gew.-% erreicht.

Nach einem weiteren Aspekt betrifft die vorliegende Erfindung ein Verfahren zur Herstellung der erfindungsgemäßen Tierstreu wie hierin beschrieben. Nach einer Ausführungsform des erfindungsgemäßen Verfahrens werden dabei in einem Schritt organische und/oder anorganische Sorbensteilchen bereitgestellt. Die für die Sorbensteilchen verwendeten Materialien wurden vorstehend näher erläutert. In einem anderen Schritt wird das vorstehend näher definierte Verarbeitungsprodukt aus der oberirdischen Biomasse der Aloe vera Pflanze zugegeben, insbesondere auf die Sorbensteilchen oder einen Teil der Sorbensteilchen aufgesprüht. Nach einer alternativen Ausführungsform des erfindungsgemäßen Verfahrens erfolgt die Zugabe durch Tränken der Sorbensteilchen mit dem flüssigen bzw. fluiden Verarbeitungsprodukt. Nach einer weiteren Ausführungsform des erfindungsgemäßen Verfahrens wird das Verarbeitungsprodukt bereits bei der Herstellung der Sorbensteilchen in flüssiger, fluider bzw. fester Form den Sorbentien zugemischt. Nach einer Ausführungsform erfolgt die Formung der Sorbensteilchen nach der Vermischung des Verarbeitungsproduktes mit den gewünschten Sorbentien.

Nach einer weiteren Ausführungsform des erfindungsgemäßen Verfahrens kann das Verarbeitungsprodukt, vorzugsweise in fester Form, getrennt von den Sorbensteilchen in der Tierstreu vorliegen, z. B. als gesonderte Partikel, ggf. mit einem geeigneten festen Trägerstoff.

Eine bevorzugte erfindungsgemäße Ausführungsform betrifft ein Verfahren zur Herstellung einer erfindungsgemäßen Tierstreu wie hierin beschrieben, umfassend die folgenden Schritte: (a) Bereitstellung von organischen und/oder anorganischen Sorbensteilchen; und (b) Zugabe mindestens eines Verarbeitungsprodukts aus der oberirdischen Biomasse der Aloe vera Pflanze.

Nach einer bevorzugten erfindungsgemäßen Ausführungsform erfolgt die Zugabe des mindestens einen Verarbeitungsprodukts aus der oberirdischen Biomasse, insbesondere den Blättern oder dem Blattinneren der Aloe vera Pflanze durch Aufsprühen auf die organischen und/oder anorganischen Sorbensteilchen.

Ein weiterer Aspekt der vorliegenden Erfindung betrifft die Verwendung eines Verarbeitungsproduktes aus der oberirdischen Biomasse der Aloe vera Pflanze in einer Tierstreu enthaltend organische und/oder anorganische Sorbensteilchen, oder in einem Behälter für Tierstreu.

Nach einer bevorzugten erfindungsgemäßen Ausführungsform wird das Verarbeitungsprodukt aus der oberirdischen Biomasse der Aloe vera Pflanze auf die organischen und/oder anorganischen Sorbensteilchen oder einen Teil davon aufgebracht, insbesondere aufgesprüht.

Nach einer weiteren bevorzugten erfindungsgemäßen Ausführungsform erfolgt das Aufbringen, insbesondere das Aufsprühen des Verarbeitungsprodukts aus der oberirdischen Biomasse der Aloe vera Pflanze auf den Behälter für die Tierstreu, und zwar vor oder nach der Einfüllung der Tierstreu. Eine Aufbringung vor der Einfüllung der Tierstreu hat den Vorteil, dass die Stelle, die als Tiertoilette vorgesehen ist, für das Tier mit einer guten Akzeptanz versehen wird. Eine Aufbringung nach der Einfüllung der Tierstreu in den Behälter der Tiertoilette hat den Vorteil, dass eine Tierstreu auch nachträglich mit dem Verarbeitungsprodukt versehen werden kann, um die hierin beschriebenen vorteilhaften Produkteigenschaften zu erzielen, und auch zusätzliche nachträgliche Aufbringungen ermöglicht sind, um den Effekt gegebenenfalls aufzufrischen oder zu verstärken. Vorzugsweise wird dabei ein flüssiges, gegebnenefalls konzentriertes Verarbeitungsprodukts aus den Blättern oder dem Blattinneren der Aloe vera Pflanze verwendet.

Die in der vorliegenden Beschreibung angegebenen verschiedenen Ausführungsformen sind, wenn nicht ausdrücklich etwas anderes angegeben ist, in beliebiger Form kombinierbar und ausdrücklich von der vorliegenden Erfindung erfasst. Gleiches gilt für die gemäß der vorliegenden Beschreibung bei der vorliegenden Erfindung eingesetzten Materialien und Bestandteile der erfindungsgemäßen Tierstreu, die ebenfalls, soweit nicht ausdrücklich anders angegeben, in beliebiger Form kombinierbar und ausdrücklich von der Erfindung erfasst sind. Dabei wird der Schutzumfang der beanspruchten Erfindung durch die Patentansprüche bestimmt.

Die Erfindung wird durch die nicht beschränkenden, nachstehenden Beispiele näher erläutert:

### Beispiel 1. Herstellung von Tierstreumaterialien

Es wurde eine klumpende Tierstreu (nachstehend kurz als "Streu A" bezeichnet) nach dem Stand der Technik wie folgt hergestellt:
320 g grubenfeuchter bayerischer Calciumbentonit werden in einem Werner-Pfleiderer-Mischer 1 Minute unter Zugabe einer kleinen Menge destillierten Wassers vorgeknetet. Die Energieaufnahme beträgt 2 kWh/to. Ziel des Vorknetens ist die Homogenisierung des Bentonits und seine Überführung in eine plastische, gut knetbare Masse. Der ideale Wassergehalt wird erfahrungsgemäß durch Zugabe von soviel Wasser eingestellt, dass bei der Verknetung ein "schmatzendes" Geräusch entsteht und der Rohbentonit Plastilin ähnelt. Dies ist meist bei einem Wassergehalt von 30 bis 35 Gew.-% der Fall. Danach wird 5 Minuten weitergeknetet; der plastilinartige Zustand wird erhalten, indem man bei Bedarf etwas Wasser zugibt. Der geknetete Bentonit wird in etwa 1 bis 1,5 cm grosse Stücke zerkleinert, in eine Porzellanschale gegeben und im Umlufttrockenschrank 1 bis 2 Stunden bei 80 bis 85[deg.]C auf einen Wassergehalt von 4 bis 8 Gew.-% getrocknet. Es wird die Granulatfraktion zwischen 1 und 5 mm abgesiebt, wobei der Anteil der Fraktion von 2 bis 5 mm mehr als etwa 80% und der Anteil der Fraktion von 1 bis 2 mm etwa 20% beträgt.

Die vorstehende Streu A wurde mit 5 Gew.-% Aktivkohleteilchen mit einer Teilchengröße zwischen 1 und 5 mm homogen vermischt, um ein Material zu erhalten, das als "Streu B" bezeichnet wurde.

Weiterhin wurde eine Tierstreu auf der Basis von Bentonit und cellulosehaltigem Material nach dem Stand der Technik (vgl. DE 196 53 152.7) wie folgt hergestellt (nachstehend "Streu C" bezeichnet): Etwa 2 kg einer Mischung, bestehend aus 50 Gew.-% aufgemahlenem Holzmehl (etwa 10 Gew.-% Wasser, Partikelgröße etwa 0,5 mm), und 50 Gew.-% einer gemahlenen Mischung aus 20 Gew.-% Ca- Bentonit und 30 Gew.-% Na-Bentonit (Wasseraufnahmefähigkeit des Bentonitgemisches etwa 200%) mit einem Wassergehalt von etwa 12,5 Gew.-% wird durch Zusatz von Wasser auf einen Feuchtigkeitsgehalt von 30,2 Gew.-% eingestellt. Das Holzmehl und die Bentonitmischung werden innig miteinander vermischt und in einer Flachmatrizenpresse der Firma Kahl (Typ 14-175) durch Pressformen verdichtet. Diese Flachmatrizenpresse ist im Wesentlichen ein zylindrisches Gefäß mit einem Innendurchmesser von etwa 20 cm mit einer gelochten Bodenplatte (Lochdurchmesser 3mm), in welchem zwei um die Zylinderachse umlaufende Walzen vorgesehen sind. Die Walzen üben auf die feuchte Mischung aus Holzmehl und Bentonitgemisch einen Pressdruck aus, wodurch die feuchte Mischung durch die gelochte Bodenplatte gepresst wird. Der Energieeintrag beträgt etwa 6 kWh/to. Die durch die Lochplatte hindurchtretenden Formkörper werden durch eine unterhalb der Lochplatte angeordnete Schneidevorrichtung (Abstreifer) quer zu ihrer Längsachse in Stücke mit einer Länge von etwa 3 mm zerteilt. Bereits bei der Zerteilung treten auch kleinere Bruchstücke auf. Das erhaltene Granulat wird etwa 6 Stunden bei 80 °C bis auf einen Restwassergehalt von 4,5 Gew.-% getrocknet, wobei es bereits bei einem geringen Druck zerbröselt. Das Granulat wurde mittels Absieben auf eine Teilchengröße von etwa 0,2 bis 5 mm eingestellt.

Schließlich wurde eine kommerzielle reine Holzstreu (d.h. eine Streu mit nur organischen Sorbentien) mittels Absieben auf eine Teilchengröße von etwa 0,5 mm bis 5 mm eingestellt, um "Streu D" zu erhalten.

### Beispiel 2. Imprägnierung der Tierstreumaterialien (Streu A bis D)

Es wurde ein kommerziell erhältliches 10:1 Gel Konzentrat aus dem Innengel der frischen Aloe vera Blätter (ALPHA ALOE ® Gel Konzentrat 10:1 der Firma Paninkret, Pinneberg) verwendet. Von diesem flüssigen Produkt wurden 10 ml auf 1 kg der wie vorstehend beschrieben hergestellten Tierstreumaterialien aufgesprüht. Dies entspricht nach einer Ausführungsform 10 Gew.-% des ursprünglichen (nicht durch die Entfernung von Wasser aufkonzentrierten) Verarbeitungsproduktes.

Die Aufbringung wurde wiederholt, wobei die Menge an Verarbeitungsprodukt durch Aufsprühen einer geänderten Menge des vorstehenden Verarbeitungsproduktes (ggf. 1:10 mit Wasser rückverdünnt) pro kg Tierstreu variiert wurde.

### Beispiel 3. Untersuchung der Wirkung auf Haustiere (Akzeptanz bzw. Bevorzugung)

Insgesamt 28 Katzen, welche zum Teil einzeln, zum Teil in Gruppen von bis zu 4 Tieren gehalten wurden, wurden über einen Zeitraum von 10 Tagen jeweils 2 Toiletten nebeneinander angeboten. Eine enthielt eine wie vorstehend beschrieben hergestellte Tierstreu A, B, C oder D ohne Verarbeitungsprodukt, die andere enthielt die gleiche Tierstreu, aber mit dem zugegebenen Verarbeitungsprodukt aus der oberirdischen Biomasse von Aloe vera.

Über den Beobachtungszeitraum hinweg wurde erfasst, wie häufig die jeweilige Toilette von der/den Katze/n benutzt wurde. Daraus wurde eine prozentuale Bevorzugung errechnet. Wurden beide Toiletten gleich bevorzugt, liegt die Bevorzugung bei 50%. Anhand der täglich entfernten Klumpen aus den jeweiligen Toiletten konnten die Beobachtungen verifiziert werden.

Die Ergebnisse sind in der nachstehenden Tabelle aufgeführt.

| Anteil des Verarbeitungsproduktes | Streu A | Streu B | Streu C | Streu D |
|---|---|---|---|---|
| 0 Gew.-% (Kontrolle) | 50%* | 50%* | 50%* | 50%* |
| 0.5 Gew-% | 81% | 76% | 79% | 71% |
| 1 Gew.-% | 83% | 73% | 82% | 75% |
| 5 Gew.-% | 80% | 70% | 82% | 77% |

| | | | | |
|---|---|---|---|---|
| * Es wurden beide Toiletten mit Tierstreu ohne Verarbeitungsprodukt befüllt, um andere Effekte auszuschließen. Die Toiletten wurden im Schnitt gleich häufig benutzt, weshalb eine Bevorzugung von 50% angegeben ist. | | | | |

Die Ergebnisse zeigen deutlich die erhebliche Bevorzugung der Tierstreumaterialien mit dem Verarbeitungsprodukt, bereits bei einem sehr geringen Anteil an Verarbeitungsprodukt in der Tierstreu. In keinem Fall wurde die imprägnierte Streu abgelehnt.

Die Ergebnisse bei Verwendung eines Verarbeitungsproduktes aus der gesamten oberirdischen Biomasse der Aloe vera Pflanze (nicht nur des Blattinneren) waren vergleichbar, wenn auch etwas schwächer ausgeprägt.

### Beispiel 4. Untersuchung der Klumpenbildung

Bei der Untersuchung der täglich entfernten Klumpen aus den jeweiligen Toiletten gemäß Punkt 3. oben wurde auch festgestellt, das die Klumpen aus den Toiletten mit den erfindungsgemäßen Tiersteumaterialien signifikant kleiner und leichter waren und sich etwas besser im Ganzen entfernen ließen als die Klumpen aus den Toiletten mit den Vergleichs-Tierstreumaterialien.

Diese Beobachtung wurde im Labor bei durch Aufbringen von Probemengen an Wasser (40 bis 60 ml) mit einer Pipette auf eine Tiersteuschüttung von etwa 7 cm bestätigt. Bei der Verwendung der erfindungsgemäßen Tierstreumaterialien (siehe oben) waren die gebildeten Klumpen signifikant kleiner und leichter und ließen sich etwas besser im Ganzen entfernen. Der Effekt war mit steigendem Anteil des Verarbeitungsproduktes stärker ausgeprägt.

### Beispiel 5. Untersuchung der Geruchsbindung

Tiertoiletten, die mit der Vergleichs-Tierstreu (A, B, C oder D), oder mit der entsprechenden erfindungsgemäßen Tierstreu mit Zusatz des Verarbeitungsproduktes aus der oberirdischen Biomasse der Aloe vera Pflanze (1 Gew.-% Zusatz des o.g. Gel Konzentrat aus dem Innengel der frischen Aloe vera Blätter) gefüllt waren, wurden unmittelbar nach einer Benutzung durch eine Katze, d.h. vor der Entfernung des Klumpens mit den Exkrementen und unmittelbar danach auf die Anwesenheit unangenehmer Gerüche untersucht. Die Geruchsuntersuchung wurde von Personen "blind" durchgeführt, d.h. die Tester wussten nicht, ob es sich um die Vergleichsstreu oder die erfindungsgemäße Tierstreu handelte. Es wurden jeweils 4 Tests mit sechs Testpersonen durchgeführt.

Es zeigte sich, dass die erfindungsgemäßen Streumaterialien vor und nach der Entfernung der Klumpen mit den Tierexkrementen eine bessere Geruchsneutralität aufwiesen. Dies deutet auf die raschere und effektivere Geruchs- und Flüssigkeitsabsorption der erfindungsgemäßen Tierstreu hin.

## Patentansprüche

1. Tierstreu mit organischen und/oder anorganischen Sorbensteilchen, enthaltend ein Verarbeitungsprodukt aus der oberirdischen Biomasse der Aloe vera Pflanze.

2. Tierstreu nach Anspruch 1, **dadurch gekennzeichnet, dass** das Verarbeitungsprodukt bei Trocknung bis zur Gewichtskonstanz bei 105°C einen Trockenanteil aufweist, der zu mindestens 25 Gew.-%, insbesondere zu mindestens 50 Gew.-%, bevorzugt zu mindestens 75 Gew.-%, eiter bevorzugt zu mindestens 90 Gew.-% der oberirdischen Biomasse der Aloe vera Pflanze oder Teilen davon entstammt.

3. Tierstreu nach einem der vorstehenden Ansprüche, **dadurch gekennzeichnet, dass** es sich bei dem/den Teil(en) der Biomasse der Aloe vera Pflanze um die Blätter oder das Innengel der Blätter handelt.

4. Tierstreu nach einem der vorstehenden Ansprüche, **dadurch gekennzeichnet, dass** das Verarbeitungsprodukt in einer Menge von mindestens 0,01 Gew.-%, insbesondere mindestens 0,5 Gew.-%, weiter bevorzugt mindestens 1 Gew.-%, jeweils bezogen auf die Gesamtmasse der Tierstreu, zugegeben bzw. aufgebracht wird.

5. Tierstreu nach einem der vorstehenden Ansprüche, **dadurch gekennzeichnet, dass** das Verarbeitungsprodukt in Form eines Fluids oder Flüssigkeit, einer Lösung, einer Suspension oder Emulsion, insbesondere in Form eines flüssigen Konzentrats aus dem Innengel der Aloe vera Blätter aufgebracht bzw. zugegeben wird.

6. Tierstreu nach einem der vorstehenden Ansprüche, **dadurch gekennzeichnet, dass** das Verarbeitungsprodukt auf die Sorbensteilchen aufgebracht, insbesondere aufgesprüht wird.

7. Tierstreu nach einem der vorstehenden Ansprüche, **dadurch gekennzeichnet, dass** die Sorbensteilchen Teilchen mit silicatischen, insbesondere schichtsilicatischen Materialien umfassen.

8. Tierstreu nach einem der vorstehenden Ansprüche, **dadurch gekennzeichnet, dass** die Sorbensteilchen Teilchen mit organischen, insbesondere cellulosehaltigen Materialien umfassen.

9. Tierstreu nach einem der vorstehenden Ansprüche, **dadurch gekennzeichnet, dass** die Sorbensteilchen Teilchen mit Aktivkohle umfassen.

10. Tierstreu nach einem der vorstehenden Ansprüche, **dadurch gekennzeichnet, dass** die Sorbensteilchen Teilchen mit schichtsilicatischen Materialien und Teilchen mit Aktivkohle umfassen oder daraus bestehen.

11. Verfahren zur Herstellung einer Tierstreu nach einem der vorstehenden Ansprüche, umfassend die folgenden Schritte:
a. Bereitstellung von organischen und/oder anorganischen Sorbensteilchen
b. Zugabe mindestens eines Verarbeitungsprodukts aus der oberirdischen Biomasse der Aloe vera Pflanze.

12. Verfahren nach Anspruch 11, **dadurch gekennzeichnet, dass** die Zugabe des mindestens einen Verarbeitungsprodukts aus der oberirdischen Biomasse der Aloe vera Pflanze durch Aufsprühen auf die organischen und/oder anorganischen Sorbensteilchen erfolgt.

13. Verwendung eines Verarbeitungsprodukts aus der oberirdischen Biomasse der Aloe vera Pflanze in einer Tierstreu enthaltend organische und/oder anorganische Sorbensteilchen, oder in einem Behälter für Tierstreu.

14. Verwendung gemäß Anspruch 13, **dadurch gekennzeichnet, dass** das Verarbeitungsprodukt aus der oberirdischen Biomasse der Aloe vera Pflanze bei auf die organischen und/oder anorganischen Sorbensteilchen oder einen Teil davon aufgebracht, insbesondere aufgesprüht wird.

15. Verwendung gemäß Anspruch 13 oder 14, **dadurch gekennzeichnet, dass** Aufbringen, insbesondere das Aufsprühen des Verarbeitungsprodukts aus der oberirdischen Biomasse der Aloe vera Pflanze auf den Behälter für die Tierstreu erfolgt, vor oder nach der Einfüllung der Tierstreu.
